# EUROPÄISCHE PATENTSCHRIFT

(11) **EP 3 302 929 B1**
(45) Veröffentlichungstag und Bekanntmachung des Hinweises auf die Patenterteilung: **25.08.2021**
(21) Anmeldenummer: 16729526.0
(22) Anmeldetag: 08.06.2016
(51) Int. Cl.: B29C 48/90, B29C 48/10, B29C 48/15, B29C 48/92, B29C 55/28, B29C 48/28

(54) **VORRICHTUNG UND VERFAHREN ZUM KALIBRIEREN EINES FOLIENSCHLAUCHES**
DEVICE AND METHOD FOR CALIBRATING A BLOWN FILM
PROCÉDÉ ET DISPOSITIF POUR CALIBRER UN FILM TUBULAIRE

(30) Priorität: 08.06.2015 DE 102015210467
(43) Veröffentlichungstag der Anmeldung: 11.04.2018
(73) Patentinhaber: Windmöller & Hölscher KG, 49525 Lengerich (DE)
(72) Erfinder: GOLDENSTEIN, Jens, 49525 Lengerich (DE); STEUTER, Henning, 49525 Lengerich (DE)
(86) Internationale Anmeldenummer: PCT/EP2016/062998
(87) Internationale Veröffentlichungsnummer: WO 2016/198437

(56) Entgegenhaltungen:
- WO-A1-2012/032128
- DE-A1- 1 937 978
- JP-B1- S 495 739
- JP-U- S5 929 212
- US-A- 3 904 334
- US-A- 3 958 913

## Beschreibung

Die Erfindung betrifft eine Vorrichtung zum Kühlen eines Folienschlauches nach dem Oberbegriff des Anspruchs 1 sowie ein Verfahren nach dem Oberbegriff des Anspruchs 10.

Ein Folienschlauch, wie er mit einer Blasfolienanlage erzeugt wird, wird in der Regel anschließend abgekühlt und auch kalibriert, so dass er einen einheitlichen Durchmesser aufweist. Um bestimmte Eigenschaften hervorzurufen, kann der Folienschlauch mit einer Flüssigkeit besonders schnell abgekühlt werden. Hier wird der Folienschlauch in Regel in der Richtung der Schwerkraft extrudiert. Der Folienschlauch besteht dabei häufig aus Kunststoff.

Eine hierauf ausgerichtete Vorrichtung zum Kühlen umfasst eine Vorrichtung zum Aufbringen von Flüssigkeit auf die Außenwandung des Folienschlauchs. Die Kühlung mit Flüssigkeit entzieht dem Folienschlauch einen Teil der Wärme schneller als es mit einem Gas möglich wäre. Die auf den Folienschlauch aufgetragene Flüssigkeit wird in der Regel möglichst vollständig wieder entfernt, bevor der Folienschlauch weiterverarbeitet, insbesondere in einer Wickelvorrichtung aufgewickelt wird. Dazu ist wenigstens ein Ableitelement vorgesehen, welches dem Ableiten zumindest eines Teils der Flüssigkeit von dem Folienschlauch, insbesondere von seiner Außenwandung, dient. Dabei umgibt das Ableitelement zumindest Teile des Folienschlauchs in Umfangsrichtung.

Die WO 2011/058072 A1 offenbart daher eine Vorrichtung und ein Verfahren zum Kühlen eines Folienschlauches, wobei eine Absaugeinrichtung zum Absaugen der Kühlflüssigkeit umfasst ist, die eine Innenoberfläche, welche ein flüssigkeitsdurchlässiges Element umfasst. Damit wird einerseits das Wasser abgesaugt und andererseits auch der Schlauch festgehalten, da dieser bei bestimmten Materialien aufgrund der Schwerkraft reißen könnte.

Die JP S49 5739 B1 offenbart ebenfalls eine Vorrichtung und ein Verfahren zum Kalibieren eines Folienschlauchs, wobei in einem Ausführungsbeispiel oberhalb einer netzartigen Kalibrierungsvorrichtung ein ringförmiger Kanal angeordnet ist, mit welchem eine Kühlflüssigkeit bereitstellbar ist. Zur Durchmesserverstellung des Netzes und zum effektiveren Zuleiten der Flüssigkeit ist eine Irisblendenanordnung unterhalb des ringförmigen Kanals angeordnet, die den Schlauchdurchmesser anpassbar ist. Ein Absaugeinrichtung zum Absaugen der Flüssigkeit ist jedoch nicht offenbart.

Die Druckschrift US 3 958 913 zeigt eine Kühleinrichtung mit einzelnen geraden und gebogenen Platten. Durch Öffnungen in diesen Platten kann Kühlluft auf den Folienschlauch gegeben werden. Ein Kühlen mit Kühlflüssigkeit ist hier nicht vorgesehen.

Der JP H02 128827 A ist eine Vorrichtung zum Kühlen eines Folienschlauches zu entnehmen, welche ebenfalls eine Absaugeinrichtung zum Absaugen der Kühlflüssigkeit umfasst, wobei ein Ableitelement vorgesehen ist. Diese Vorrichtung ist auf einen bestimmten Durchmesser des Folienschlauchs angepasst.

Es kann jedoch vorkommen, dass trotz der Kalibrierung sich die Dimensionen des Folienschlauches sich beim Austritt aus der Kalibriereinrichtung verändern, so dass die Absaugeinrichtung ihre Wirkung nicht mehr vollständig erfüllen kann.

Es ist daher die Aufgabe der vorliegenden Erfindung, eine Vorrichtung und ein Verfahren zum Kühlen eines Folienschlauches derart weiterzubilden, dass auch bei unterschiedlichen Betriebssituationen die Flüssigkeit möglichst zuverlässig von der Außenoberfläche des Folienschlauches abgesaugt wird.

Erfindungsgemäß wird diese Aufgabe durch sämtliche Merkmale des Anspruchs 1 gelöst. In den abhängigen Ansprüchen sind mögliche Ausgestaltungen der Erfindung angegeben.

Gemäß der vorliegenden Erfindung ist vorgesehen,
**dass** das Ableitelement oder die Ableitelemente unterhalb des zumindest einen Folienführungselements angeordnet ist oder sind,
**dass** der Abstand, den das Ableitelement oder die Ableitelemente zur Hauptachse des Folienschlauchs einnimmt oder einnehmen, veränderbar ist, und
**dass,** wenn ein Ableitelement vorgesehen ist, dieses in Umfangsrichtung sich selbst in Teilbereichen überlappt, oder
dass, wenn mehrere Ableitelemente vorgesehen sind, ein Ableitelement Teilbereiche wenigstens eines benachbarten Ableitelements überlappt.

Sollte sich also eine Formatänderung des Folienschlauches ergeben, so kann das oder die Ableitelemente hierauf derart eingestellt werden, dass anschließend weiterhin die Flüssigkeit möglichst vollständig von der Außenoberfläche des Folienschlauches abgenommen wird bzw. keine Beschädigungen des Folienschlauches in Kauf genommen werden muss. Eine Formatänderung des Folienschlauches kann dabei beabsichtigt sein. Das oder die Ableitelemente selbst können eine oder mehrere der folgenden Ausgestaltungen umfassen:
- Absaugeinrichtung
- Einrichtung zum Abblasen von Flüssigkeit
- Einrichtung zum Abschlagen von Flüssigkeit
- Einrichtung zum Abputzen von Flüssigkeit
- Einrichtung zum Abstreifen von Flüssigkeit
- Einrichtung zum Verdampfen von Flüssigkeit
- Einrichtung zum Bereitstellen einer Strömungsabrisskante

Bevorzugt ist dabei, wenn die abgeleitete Flüssigkeit in einem Tank sammelbar ist. Aus diesem Tank kann die Flüssigkeit mittels einer Zuführeinrichtung, beispielsweise mittels eines Schlauches in das Flüssigkeitsreservoir führbar sein. Vorteilhaft ist dabei das Vorsehen einer Einrichtung zum Bestimmen des Flüssigkeitsstandes in dem Flüssigkeitsreservoir, so dass ein Ventil angesteuert werden kann, so dass nur so viel Flüssigkeit hinzufügbar ist, bis der Sollflüssigkeitsstand erreicht ist. Es wird also eine Flüssigkeitsstandregelung innerhalb des Flüssigkeitsreservoirs realisiert.

Besonders bevorzugt ist Wasser als Flüssigkeit, da dieses leicht handzuhaben ist.

In einer vorteilhaften Ausgestaltung der Erfindung ist der Verstellbereich, also der Bereich, in dem der Abstand des Ableitelements zur Hauptachse der Folien einstellbar ist, vorzugsweise mindestens +/- 10mm und/oder bis zu +/- 500mm.

In einer Ausführungsform der Erfindung ist eine Einrichtung zur Aufbereitung der Flüssigkeit vorgesehen. Eine solche Einrichtung kann beispielsweise eine Entkalkungseinrichtung, eine Entsalzungseinrichtung, eine Filtereinrichtung oder eine Entkeimungseinrichtung sein. Vorteilhaft ist dabei, dass die Flüssigkeit möglichst frei von fremden Stoffen ist, welche negative Auswirkungen auf den Folienschlauch selbst oder für die weitere Verwendung dieses Folienschlauches haben könnten.

Vorteilhaft ist es dabei, wenn die Vorrichtung zum Aufbringen von Flüssigkeit wenigstens ein Folienführungselement mit wenigstens einer Innenwandung umfasst, welches zumindest teilweise um den Folienschlauch herum angeordnet ist und entlang welchem der Folienschlauch führbar ist. Mit anderen Worten wird die Blasfolie, während sie mit der Flüssigkeit beaufschlagt ist, mit einem Folienführungselement geführt. Insbesondere ist es dadurch möglich, die Flüssigkeit zu kanalisieren und eng am Folienschlauch zu halten, so dass zur Kühlung nur ein Flüssigkeitsfilm notwendig ist. Ein Flüssigkeitsverlust durch ggf. entstehende Wasserspritzer wird dadurch vermieden. Gleichzeitig wird durch die Flüssigkeit vermieden, dass der Folienschlauch das Folienführungselement berührt, so dass Beschädigungen des Folienschlauchs in einem geringeren Maße auftreten.

Ein einzelnes oder eine Mehrzahl solcher Folienführungselemente, die den Folienschlauch umgeben, können dabei auch der Kalibrierung des Folienschlauches dienen.

Das eine Folienführungselement oder die Mehrzahl der Folienführungselemente umschreiben oft einen rohrförmigen Bereich mit wenigstens einer nach innen gerichteten, d.h. in Richtung des Folienschlauches gerichteten Wandung, durch welchen der Folienschlauch führbar ist. Der Folienschlauch ist dabei in der Regel rotationssymmetrisch, wobei die Transportrichtung und die Symmetrieachse parallel zueinander liegen. Die Symmetrieachse ist dabei im Wesentlichen deckungsgleich mit der Hauptträgheitsachse des Folienschlauches innerhalb der Kalibriereinrichtung. Die Hauptträgheitsachse wird im Folgenden auch kurz als Hauptachse bezeichnet.

So ist in der WO 2012/032128 A1 eine Kalibriereinrichtung offenbart, der an eine Formatänderung des Folienschlauches in weiten Bereichen anpassbar ist. Die vorliegende Erfindung ist daher besonders vorteilhaft mit einer Kalibriereinrichtung gemäß der WO 2012/032128 A1 kombinierbar. Die dortige Offenbarung einer formatvariablen Kalibriereinrichtung gilt hiermit in dieser Patentanmeldung mit aufgenommen. Der Abstand, den das flüssigkeitsdurchlässige Element zur Hauptachse des Folienschlauches einnimmt, ist zwischen einem Minimalabstand und einem Maximalabstand einstellbar, wobei bevorzugt der Maximalabstand mindestens das 1,2-Fache des Minimalabstands ist.

In einer erfindungsgemäßen Vorrichtung ist vorgesehen, dass der Folienschlauch von innen mit einem Druck beaufschlagbar ist, so dass sich der Folienschlauch im Vergleich zu seinem Durchmesser, den er bei der Extrusion aus einer Ringdüse hat, in radialer Richtung ausdehnt. Durch diesen Druck, welcher insbesondere ein Überdruck ist, wird der Folienschlauch gegen das Folienführungselement gedrückt, welches dann eine Gegenkraft bereitstellt. Die radiale Ausdehnung wird in der Regel als Aufblasverhältnis bezeichnet, dass im Zusammenhang mit einer erfindungsgemäßen Vorrichtung zum Kühlen 1,1 bis 3 beträgt. Das bedeutet, dass der Durchmesser des Folienschlauches gegenüber dem Durchmesser der Ringdüse um 10% bis 200% angewachsen ist.

Bevorzugt ist dabei, wenn oberhalb oder im oberen Bereich des Folienführungselements ein Flüssigkeitsreservoir vorgesehen ist, mit welchem die Flüssigkeit bereitstellbar ist, wobei insbesondere die Flüssigkeit zwischen das Folienführungselement und den Folienschlauch (6) leitbar ist. Dabei kann insbesondere der Einlaufbereich des Folienführungselements für den Folienschlauch das Flüssigkeitsreservoir ausbilden, so dass keine eigenständige Vorrichtung notwendig ist. Dieses spart Kosten. Zudem wird dadurch eine kompakte Einheit geschaffen, die mit einer möglichst geringen Bauhöhe auskommt.

Weiterhin ist erfindungsgemäß vorgesehen, dass das zumindest eine Ableitelement unterhalb, insbesondere unmittelbar unterhalb des zumindest einen Folienführungselements angeordnet ist. Damit wird eine kompakte Einheit geschaffen, die mit einer möglichst geringen Bauhöhe auskommt. Außerdem wird vermieden, dass die Flüssigkeit von dem Folienschlauch abtropfen und an Orte gelangen kann, an welcher keine Flüssigkeitsansammlungen beabsichtigt sind.

In einer bevorzugten Ausführungsform sind mehrere Ableitelemente vorgesehen, welche in ihrer Gesamtheit den Folienschlauch vollständig umgeben. Jedes Ableitelement bildet dabei ein Segment, so dass die eine Ableiteinrichtung vorgesehen ist, die segmentiert ist. Damit überdeckt jedes Segment einen Bogenabschnitt des Folienschlauchs, wobei bei Änderung des Formats des Folienschlauches jedes Segment einen sich entsprechend ändernden Bogenabschnitt überdeckt. Auf diese Weise ist eine einfache Möglichkeit geschaffen, die Absaugeinrichtung auf einen gewünschten Durchmesser einzustellen.

Gemäß der Erfindung ist ein einziges Ableitelement vorgesehen, welches in Umfangsrichtung sich selbst in Teilbereichen überlappt. Bei einem kleinen Durchmesser des Folienschlauches kann der Bereich, in dem sich das Ableitelement selbst überlappt, größer sein als im Fall des großen Durchmessers des Folienschlauches. In anderen Worten kann zur Verkleinerung des Durchmessers des Ableitelements der Überlappungsbereich vergrößert werden. In einer alternativen Ausführungsform der Erfindung sind mehrere Ableitelemente vorgesehen, wobei ein Ableitelement Teilbereiche mindestens eines benachbarten Ableitelements überlappt. Diese alternative Ausführungsform bietet dieselben Vorteile wie die erstgenannte Ausführungsform, bezieht sich jedoch darauf, dass die Ableiteinrichtung segmentiert ist. Die beiden vorgenannten Alternativen können jeweils oder in Kombination, in Transportrichtung gesehen, einmal oder mehrfach vorgesehen sein, so dass mehrere übereinander angeordnete Ableitelemente vorgesehen sein können.

Um nun eine Durchmesserverstellung vornehmen zu können, ist es vorteilhaft wenigstens ein relativ zum Folienschlauch mindestens in radialer Richtung bewegbares Stützelement vorzusehen. An diesem Stützelement kann das Ableitelement befestigt sein, oder es kann sich auf diesem in radialer Richtung abstützen. Im Falle des Abstützens in radialer Richtung kann vorgesehen sein, dass das Ableitelement eine Vorspannung in radialer Richtung aufweist, so dass es gegen das Stützelement eine Kraft ausübt. Wird nun das Stützelement nach außen bewegt, so vollzieht das Stützelement ebenfalls diese Bewegung nach außen, so dass der Abstand des Ableitelements zur Hauptachse des Folienschlauchs größer wird. Insgesamt ist mit dem radial beweglichen Stützelement eine einfache Möglichkeit bereitgestellt, den genannten Abstand einzustellen. Dabei kann eine Mehrzahl derartiger Stützelemente vorgesehen sein, welche dann vorzugsweise im Wesentlichen gleichmäßig über den Umfang des Folienschlauches verteilt sind. Es versteht sich von selbst, dass das oder die Stützelemente auf der dem Folienschlauch abgewandten Seite des oder der Ableitelemente angeordnet sind.

In einer vorteilhaften Ausführungsform der Erfindung ist eine schienen Schlittenanordnung vorgesehen, mit welcher das wenigstens eine Ableitelement in Radialrichtung des Folienschlauches bewegbar ist. Die Schienen dieser schienen Schlittenanordnung sind dabei vorzugsweise bereits in Radialrichtung angeordnet, so dass ein auf diesen Schienen laufender Schlitten auf einfache Weise in radialer Richtung bewegbar ist. Besondere Vorteile dieser Schienen-Schlittenanordnung treten dabei mit dem bereits genannten Stützelement auf, denn in diesem Fall kann das Stützelement auf einfache Weise in Radialrichtung bewegt werden, so dass das an diesem Stützelement befestigte oder das sich auf diesen Stützelement abstützende Ableitelement ebenfalls auf einfache Weise und auch präzise bewegbar und damit in seinem Abstand einstellbar ist. Eine solche schienen Schlittenanordnung kann beispielsweise bereits einen Linearmotor umfassen, mit welchem eine direkte Kraftübertragung erfolgen kann.

In einer bevorzugten Ausführungsform ist allerdings ein Antrieb vorgesehen, welche auf Antriebskraftübertragungsmittel wirkt, mit welchen eine Antriebskraft auf das zumindest eine Ableitelement zur Veränderung des genannten Abstands übertragbar ist. Damit wird die durch den Antrieb zur Verfügung gestellte Antriebskraft nicht direkt auf das Ableitelementgegeben. Damit kann beispielsweise ein einzelner Antrieb vorgesehen werden, welcher einer Mehrzahl an Ableitelementen mit einer Antriebskraft versorgt, was Kosten spart.

Vorteilhaft ist es dabei, wenn die Antriebskraftübertragungsmittel wenigstens eine Kette umfassen, welche insbesondere wenigstens einen Mitnehmer antreibt, welcher unmittelbar oder mittelbar auf das Stützelement wirkt. Bevorzugt ist dabei, dass der Mitnehmer an der Kette befestigt und den bereits oben erwähnten Schlitten antreibt. Dabei ist es vorteilhaft, wenn die Kette über einen Abschnitt parallel zu der Schiene, in welchem der Schlitten gleitet, geführt ist. Das Vorsehen einer Kette ist eine kostengünstige Möglichkeit, die Antriebskraft zu übertragen. Anstelle einer Kette kann auch ein Zahnriemen, Riemen, Bänder oder Drähte vorgesehen werden, also jedes flexible Übertragungsmittel, das sich unter Einwirkung der Antriebskraft nicht oder nicht wesentlich längt. Die nicht ganz auszuschließende Längung kann durch ein in seiner Position veränderbares Spannrad ausgeglichen werden.

In einer vorteilhaften Ausführungsform der Erfindung ist vorgesehen, dass das Ableitelement eine mit Durchgängen und/oder Durchbrüchen versehene Platte umfasst. Diese Platte kann insbesondere eine Metallplatte sein. Es kann aber auch eine Platte aus Kunststoff oder einem anderen Material sein. Wichtig ist jedoch, dass die Platte eine gewisse Elastizität aufweist, d. h. dass ihr Radius wenigstens in gewissen Grenzen dem Durchmesser des Folienschlauchs anpassbar ist. Dabei hat die Platte bevorzugt auch Rückstellkräfte ähnlich zu einem federnden Element, so dass bei einer Einstellung der Ableiteinrichtung auf einen größeren Durchmesser sich der Radius der Platte automatisch anpasst. Ist eine Metallplatte vorgesehen, ist diese bevorzugt nichtrostend ausgestaltet, etwa durch Auswahl einer entsprechenden Legierung oder dem Überzug mit einem nichtrostenden Material. Dieser Überzug kann eine Kunststoffbeschichtung sein. Die Platte kann mit runden Löchern oder mit Langlöchern versehen sein, wobei diese auf geeignete Weise einbringbar sind, beispielsweise durch eine spanende Bearbeitung, durch Stanzen oder auch durch eine nichtberührende Bearbeitung wie Laserschneiden. Anstelle einer Platte kann auch Drahtgitter bzw. -netz vorgesehen werden, wobei dieses Gitter dann vorteilhafterweise an einem Rahmen befestigbar ist.

Um Beschädigungen des Folienschlauches weiter zu reduzieren, insbesondere bei dem Einsatz von Metallplatten, ist vorgesehen, dass die dem Folienschlauch zugewandte Oberfläche des Ableitelements Stoff, Vlies, Filz und/oder ein Gewebe umfasst. Wichtig ist dabei, dass es sich um ein weiches Material handelt, was aber dennoch flüssigkeitsdurchlässig ist, vorzugsweise in einem ausreichenden Maße, so dass die Flüssigkeit möglichst vollständig von der Oberfläche des Folienschlauchs absaugbar ist. Das Material selbst ist bevorzugt wasserabweisend, d.h. es nimmt kein Wasser auf, was zu Effekten wie etwa zum Quellen führen könnte.

Eine andere, vorteilhafte Ausführungsform kann auch eine Vielzahl an Stiften umfassen, die radial zum Folienschlauch ausgerichtet sind. Diese Stifte tragen an ihren dem Folienschlauch zugewandten Enden vorzugsweise abgerundete Kopfe, welche den Folienschlauch führen können. Diese Stifte können in Bohrungen von Platten verschieblich gelagert sein, um die Anpassung an den Durchmesser des Folienschlauches zu ermöglichen. Zwischen den Stiften befindet sich dann ein freies Volumen, über welches die Flüssigkeit abgesaugt werden kann.

Die genannte Aufgabe wird auch gelöst durch die Merkmale des Anspruchs 10.

Eine erfindungsgemäße Blasfolienanlage umfasst eine Flachlegeeinrichtung, die sich in Transportrichtung des Folienschlauches der Vorrichtung zum Kühlen des Folienschlauches anschließt.

In einer erfindungsgemäßen Blasfolienanlage ist ein Folienschlauch herstellbar, dessen Wanddicke unter 5mm, insbesondere unter 1mm und bevorzugt unter 0,5mm liegt.

In einer erfindungsgemäßen Blasfolienanlage ist der Abstand zwischen dem Extrusionswerkzeug und der Vorrichtung zum Kühlen des Folienschlauches einstellbar. Dazu ist die Vorrichtung zum Kühlen des Folienschlauches an einer Höheneinstelleinrichtung angeordnet.

In einer erfindungsgemäßen Blasfolienanlage ist bevorzugt der Verstreckfaktor, also die Längenänderung sowohl in Umfangsrichtung als auch in Transportrichtung mindestens 2 und/oder höchstens 100, bevorzugt im Bereich von 5 bis 15. Ein solcher Verstreckfaktor führt gleichzeitig zu einer entsprechend geringeren Wanddicke des Folienschlauches.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Vorrichtung und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: eine Ansicht einer Kalibriereinrichtung, bei der der Durchmesser des rohrförmigen Bereichs veränderbar ist
- Fig. 2: einen Schnitt durch eine erfindungsgemäße Kalibriereinrichtung
- Fig. 3: eine Draufsicht auf die Absaugeinrichtung
- Fig. 4: ein flüssigkeitsdurchlässiges Element
- Fig. 5: eine erfindungsgemäße Blasfolienanlage

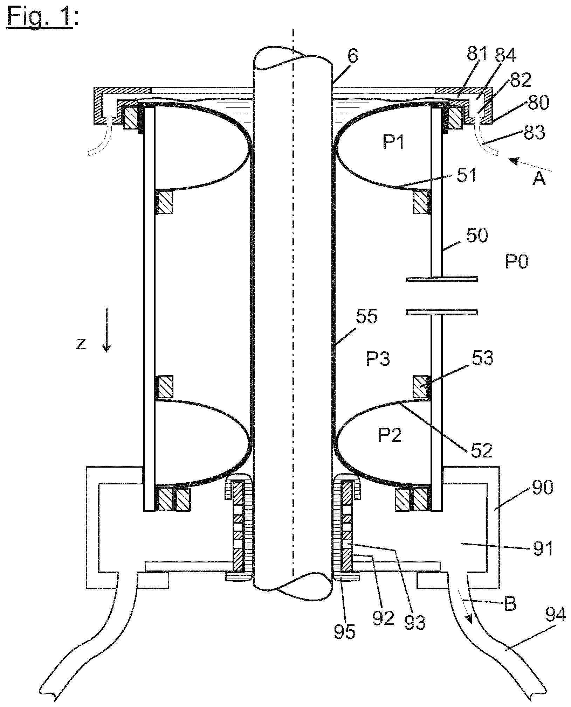

Die **Figur 1** zeigt eine Kalibriereinrichtung 1, wobei bei diesem Ausführungsbeispiel der Durchmesser des rohrförmigen Bereichs veränderbar ist.

Oberhalb der Hülse 50 ist ein Ring 80 vorgesehen, der an seiner Innenoberfläche eine umlaufende Öffnung 81 umfasst und der eine Ringkammer 84 umschließt. In radialer Richtung gesehen überragt der Ring 80 die Hülse. In diesem die Hülse 50 überragenden Teil ist eine umlaufende Vertiefung 82 eingebracht, die als Flüssigkeitsreservoir dienen kann. Die Flüssigkeit wird über Zuführschläuche 83, die vorteilhafterweise gleichmäßig über den Umfang des Rings verteilt sein können, zugeführt, was durch den Pfeil A angedeutet ist. Bei einem ausreichend hohen Flüssigkeitsstand innerhalb der Ringkammer tritt die Flüssigkeit aus der umlaufenden Öffnung 81 heraus und läuft in den Einlaufbereich zwischen dem elastisch verformbaren, rohrförmigen Bereich 55 und dem Folienschlauch 6 hinein. Hier wird ein Flüssigkeitsring ausgebildet. Der Folienschlauch nimmt einen Teil der Flüssigkeit mit, wobei letztere den Folienschlauch kühlt. Der Folienschlauch 6 wird in Transportrichtung z transportiert. Der Folienschlauch 6 ist gekennzeichnet durch seine Symmetrieachse 85, die gleichzeitig seine Hauptträgheitsachse oder kurz seine Hauptachse ist.

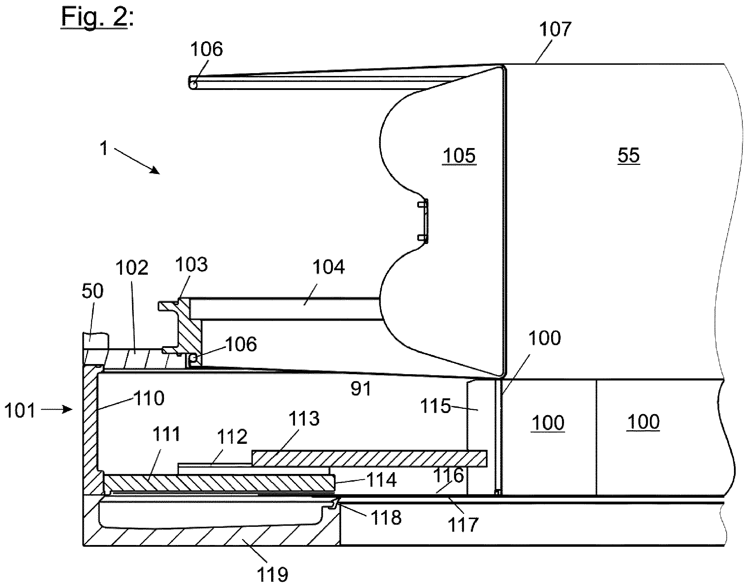

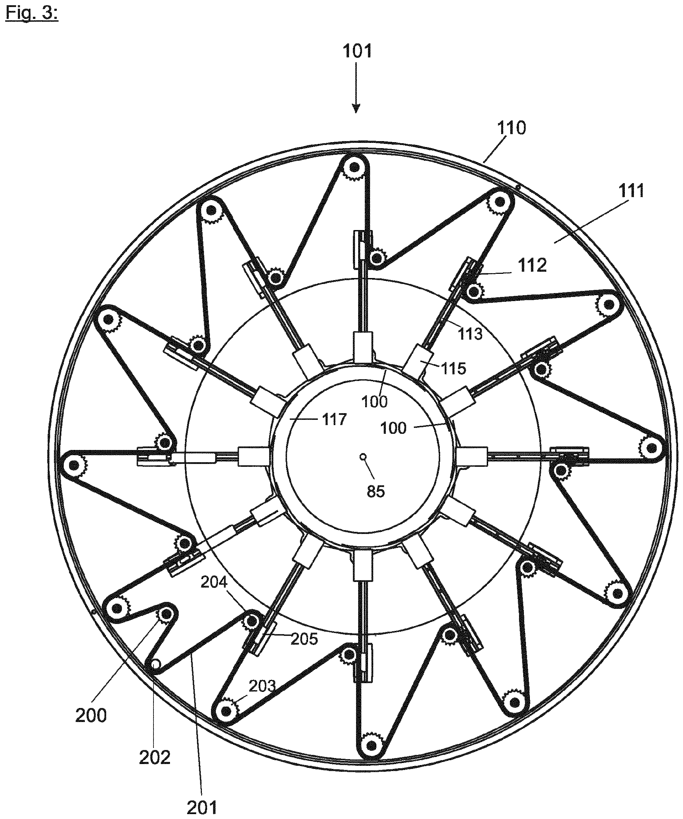

Um die Flüssigkeit nach ihrer Kühlwirkung wieder von dem Folienschlauch entfernen zu können, ist unterhalb des rohrförmigen Bereichs eine Absaugeinrichtung 89 angeordnet. Diese umfasst einen Ring 90, der ebenfalls eine ringförmige Kammer 91 bildet. Die innere Wand 92 ist mit Öffnungen 93 versehen, durch die das Wasser von der Oberfläche des Folienschlauchs abgesaugt werden kann. Zum Absaugen ist die ringförmige Kammer 91 über einen oder mehrere Schläuche 94 an eine Unterdruckquelle angeschlossen. Die Saugrichtung ist mit dem Pfeil B angedeutet. Damit der Folienschlauch 6 nun nicht an den Öffnungen 93 beschädigt wird, sind diese mit einem porösen Material 95 abgedeckt, durch welche zwar die Flüssigkeit gelangen kann, welches aber eine Verformung des Materials der Folienblase vermeidet. Als poröses Material kann etwa ein Gewebe, beispielsweise ein textiles Gewebe dienen. Viele andere Materialien, die für die genannte Anwendung geeignete Eigenschaften aufweisen, sind denkbar. Die innere Wand 92, die Öffnungen 93 und das Material 95 bilden zusammen als flüssigkeitsdurchlässiges Element 100 bezeichnetes Ableitelement. Die Vorrichtung und das Verfahren zur Veränderung des Innendurchmessers des rohrförmigen Bereichs sind in den Figuren 11 und 12 sowie den zugehörigen Beschreibungsteilen der Veröffentlichung WO 2012/ 032128 A1 offenbart. Diese Fundstellen gelten hiermit als in dieser Patentanmeldung einbezogen. Allerdings ist dieses nur ein Ausführungsbeispiel einer Kalibriervorrichtung mit einem durchmesserveränderbaren rohrförmigen Bereich. Auch andere Ausführungsbeispiele solcher Kalibriervorrichtung sind vorteilhaft mit Absaugeinrichtungen, wie sie insbesondere anhand der Figuren 2 und 3 und der folgenden Beschreibungsteilen erläutert wird, kombinierbar.

In der **Figur 2** ist nun ein Teil einer Ansicht durch einen Schnitt einer erfindungsgemäßen Kalibriereinrichtung 1 mit einer Absaugeinrichtung 101 dargestellt. Der Folienschlauch 6 ist der Übersichtlichkeit halber in dieser Ansicht nicht dargestellt. Die Hülse 50 trägt an ihrer Unterseite einen Stützring 102, auf dem sich über einen Zwischenring 103 und einer Halteeinrichtung 104 ein ringförmiger Körper 105 abstützt, mit welchem der Durchmesser des rohrförmigen Bereichs 55 einstellbar ist, was hier nicht näher erläutert werden soll. Der rohrförmige Bereich ist vorzugsweise gebildet durch einen Zylinder 107 aus einem flexiblen Material, der vom Innbereich her über den ringförmigen Körper nach außen gezogen ist und mittels Befestigungsringen 106 an einem geeigneten Bauteil, hier der Zwischenring 103 befestigt ist.

Unterhalb der Hülse 50 ist ein Hülsenansatz 110 vorgesehen, der eine nach innen reichende Tragplatte 111 trägt. Auf der Tragplatte 111 ist eine Schiene 112 angeordnet, auf welchem der Schlitten 113 insbesondere in radialer Richtung r des Folienschlauches bewegbar ist. Die Innenwandung 114 hat einen derart großen Abstand zur Hauptachse des Folienschlauches, dass die bei der Einstellung der Kalibriereinrichtung auf den größtmöglichen mit der Kalibriereinrichtung führbaren Folienschlauch die Tragplatte keine Limitierung darstellt. Der Schlitten 113 trägt an seinem der Hauptachse des Folienschlauches zugewandten Ende ein Stützelement 115, an dessen inneren Fläche das flüssigkeitsdurchlässige Element 100 angeordnet ist. Es sind in dem gezeigten Ausführungsbeispiel mehrere flüssigkeitsdurchlässige Elemente 100 vorgesehen, von denen zwei dargestellt sind.

Damit eine ringförmige Kammer ausgebildet werden kann, ist unterhalb eines jeden Stützelements 115 wenigstens eine Blechplatte 116 vorgesehen, welche mit dem Stützelement 115 verschiebbar ist. Bevorzugt ist diese Blechplatte an dem Stützelement befestigt. Unterhalb der Blechplatte 116 ist ein flacher flexibler Ring 117, insbesondere ein Gummiring, angeordnet, dessen Innenkante dazu eingerichtet ist, Flüssigkeit, welche nicht mittels der Absaugeinrichtung von der Außenoberfläche des Folienschlauchs abgesaugt werden konnte, abzustreifen. Damit auch die Innenkante des Gummirings hinsichtlich des Abstands zur Hauptachse des Folienschlauches einstellbar ist, kann dieser in radialer Richtung gedehnt werden, was bevorzugt simultan zur Verstellung des Abstands der flüssigkeitsdurchlässigen Elemente erfolgt. Unterhalb des flexiblen Rings 117 ist eine umlaufende Dichtung 118 angeordnet, die mit einerseits dichtend an dem flexiblen Ring anliegt, andererseits in eine Nut des unteren Abschlussrings 119 eingelassen ist. Der untere Abschlussring 119 ist an dem Hülsenansatz 110 befestigt.

Insgesamt wird mit der beschriebenen Absaugeinrichtung eine ringförmige Kammer 91 gebildet, die zwecks Absaugung der Flüssigkeit mit einem Unterdruck beaufschlagbar ist. Dadurch wird der flexible Ring 117 gegen die zumindest eine Blechplatte gezogen, wobei der flexible Ring 117 insbesondere auch an der Unterkante der flüssigkeitsdurchlässigen Elemente anliegt. Oberhalb der flüssigkeitsdurchlässigen Elemente 100 wird die Kammer 91 durch den Zylinder 107, den Zwischenring 103 und dem Stützring 102 gebildet. Um eine erhöhte Dichtwirkung zu erreichen, kann sich der ringförmige Körper 105 durch seine Gewichtskraft zumindest zum Teil auf dem Stützelement 115 abstützen.

Die **Figur 3** zeigt nun eine Draufsicht auf die Absaugeinrichtung 101, wobei einige bereits anhand der Figur 2 erläuterten Bezugszeichen auch in die Figur 3 übernommen worden sind.

Deutlich zu sehen ist, dass mehrere flüssigkeitsdurchlässige Elemente 100 vorgesehen sein, welche jeweils das benachbarte Element überlappen bzw. vom benachbarten Element überlappt werden.

In der Figur 3 sind nun Antriebskraftübertragungsmittel zu erkennen, die im Folgenden näher erläutert werden. Ein Antriebszahnrad 200 wird von einem nicht dargestellten Antriebsmotor, vorzugsweise von einem Elektromotor, angetrieben und überträgt die Antriebskraft auf die Kette 201. Die Kette 201 lässt sich durch den Kettenspanner 202 spannen, so dass der Verschleiß der Kette ausgeglichen werden kann. Im Bereich eines jeden Stützelements 115 ist die Kette über ein äußeres Zahnrad 203 und ein innere Zahnrad 204 geführt, wobei diese Zahnräder derart angeordnet sind, dass die Kette zwischen ihnen im Wesentlichen in radialer Richtung läuft. In dem Bereich zwischen den beiden Zahnrädern ist ein Mitnehmer 205 befestigt, der die von der Kette übertragene Antriebskraft auf den Schlitten 113 überträgt und so für die Verschiebung des Stützelements und damit des flüssigkeitsdurchlässigen Elements 100 relativ zur Hauptachse 85 bewirkt.

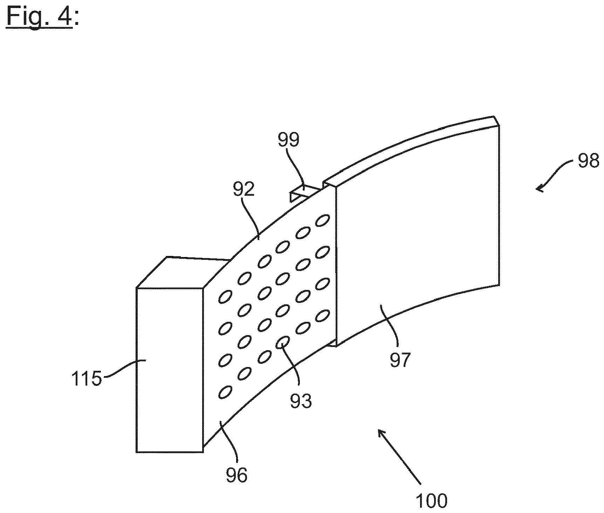

Die **Figur 4** zeigt nun ein flüssigkeitsdurchlässiges Element 100, wie es in einer erfindungsgemäßen Kalibriervorrichtung vorgesehen ist. Sie umfasst zunächst eine Platte 92, in die zahlreiche Öffnungen 93 eingebracht sind. An einem ersten Ende 96 ist das Element 100 an dem Stützelement 115 befestigt.

An dem Element 100 ist des Weiteren ein Material 95 angeordnet, das vorteilhafterweise als taschenförmiger Überzug 97 ausgestaltet ist. Dieser Überzug 97 kann in oder gegen die Umfangsrichtung des Folienschlauchs bewegt werden, so dass ein Auswechseln des Überzugs 97 über das freie Ende 98 des Elements 100 ohne großen Aufwand möglich ist. Vorteilhafterweise ist darüber hinaus wenigstens ein Haken 99 vorgesehen, der am oberen und/oder unteren Rand des Elements 100 angeordnet ist und mit welchem das Element 100 in das benachbarte Element 100 eingehakt ist, welches von dem Element 100 überdeckt wird. Auf diese Weise wird erreicht, dass die Mehrzahl der Elemente 100 sich einer Kreisform stärker annähert und diese auch bei einer Abstandsänderung beibehält.

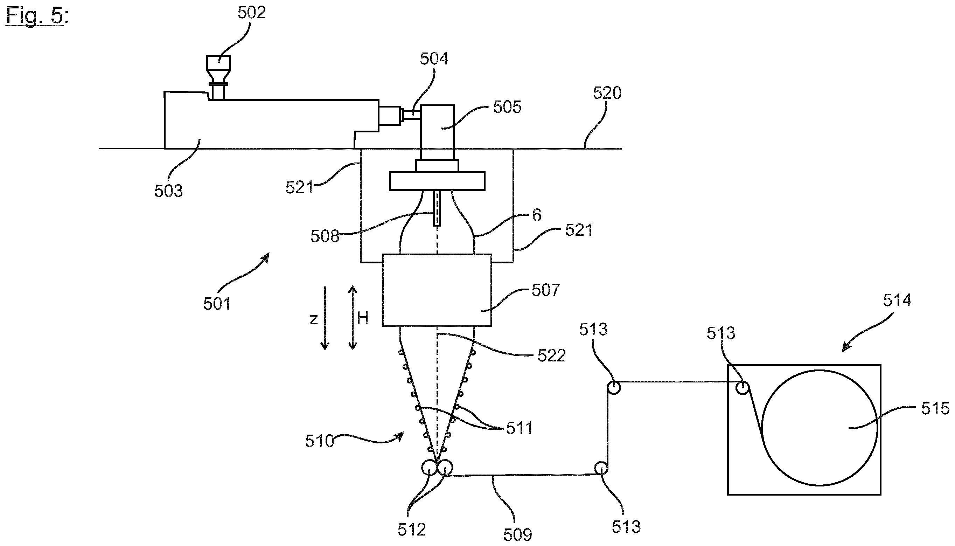

Die **Figur 5** stellt schließlich eine erfindungsgemäße Blasfolienanlage 501 dar. Dem Einfüllstutzen 502 wird ein Kunststoff zugeführt, welcher dann in dem Extruder 503 plastifiziert wird. Die entstandene Masse wird über eine Verbindungsleitung 504 dem Blaskopf 505 zugeführt, mit welchem aus der Masse ein Folienschlauch 6 gebildet wird. Dem Blaskopf 505 können weitere Extruder zugeordnet sein, so dass mehrschichtige Folien herstellbar sind. Die Extruder können dabei auf einer erhöhten Plattform 520 angeordnet sein, an welcher auch der Blaskopf 505 aufgehängt ist. Auch eine Trageinrichtung 521 kann an dieser Plattform angeordnet sein. Diese Trageinrichtung trägt den weiter unten näher beschriebenen Kalibrierkorb 507, wobei die Trageinrichtung eine Höhenverstellung umfasst, mit welcher der Abstand des Kalibrierkorbes 507 zum Blaskopf einstellbar ist. Dieser Sachverhalt wird durch den Doppelpfeil H verdeutlicht.

Der Folienschlauch 6 verlässt den Blaskopf durch eine in dieser Darstellung nicht sichtbaren Ringdüse in Transportrichtung z. Die unterbrochene Linie 522 stellt dabei die Symmetrieachse des Folienschlauchs 6 dar.

Der Folienschlauch 6 liegt beim Verlassen des Blaskopfes 5 zunächst als Folienblase vor, in der gegenüber dem Umgebungsdruck ein leicht erhöhter Innendruck vorliegt. Dies wird durch die Zuführung von Druckluft durch den Gebläsestutzen 508 erreicht. Aufgrund des erhöhten Innendrucks weitet sich das noch nicht verfestigte Material des Folienschlauches 6 auf. Letztlich wird auf diese Weise der Durchmesser des fertigen Folienschlauches 6 als auch die Dicke des Folienmaterials eingestellt.

Anschließend gelangt die noch nicht verfestigte Folienblase 6 in die als Kalibrierkorb 507 bezeichnete Kalibrier- und/oder Kühleinrichtung. Hier wird der Durchmesser des Folienschlauches begrenzt. Innerhalb des Kalibrierkorbes 507 kühlt der Folienschlauch auf eine Temperatur ab, bei der eine nachträgliche Verformung nicht mehr oder nur noch unter Einsatz großer Kräfte möglich ist. Die Position, an der dieser Phasenübergang stattfindet, wird oft als "Frostlinie" bezeichnet.

Der Kalibrierkorb 507 kann gemäß einer oder verschiedener Ausführungsformen, wie sie im Rahmen der vorliegenden Patentanmeldung beschrieben und in den Figuren dargestellt ist, ausgestaltet sein.

Nach dem Verlassen des Kalibrierkorbes 507 gelangt der Folienschlauch 6 in eine Flachlegeeinrichtung 510, in welcher der Folienschlauch 6 nahezu oder vollständig zu einer doppellagigen Folienbahn 509 umgeformt wird. Dabei wird der Folienschlauch 6 zwischen Paaren von Führungselementen 511 geführt, die im Verlauf der Transportrichtung z einen immer geringeren Abstand voneinander einnehmen. Die vollständige Flachlegung erfolgt durch eine Abquetschvorrichtung, die aus einem Paar von Abquetschwalzen 512 besteht. Die Abquetschwalzen 512 verhindern dabei einen Verbleib von Luft innerhalb des Folienschlauchs bei seinem weiteren Transport.

Der Folienschlauch 6 beziehungsweise die daraus entstandene Folienbahn 509 kann zusätzlich durch eine nicht gezeigte Reversiervorrichtung geführt werden, oder, wie im Fall der gezeigten Vorrichtung, direkt über Umlenkwalzen 513 einer Wickelvorrichtung 514 zugeführt werden, wo die Folienbahn zu einem Wickel 515 verarbeitet wird.

| **Bezugszeichenliste** | |
|---|---|
| 1 | Kalibriereinrichtung |
| 6 | Folienschlauch |
| | |
| 50 | Hülse |
| 55 | Elastisch verformbarer rohrförmiger Bereich |
| | |
| 80 | Ring |
| 81 | Umlaufende Öffnung |
| 82 | Umlaufende Vertiefung |
| 83 | Zuführschläuche |
| 84 | Ringkammer |
| 85 | Symmetrieachse |
| 89 | Absaugeinrichtung |
| | |
| 90 | Ring |
| 91 | Kammer |
| 92 | Innere Wand |
| 93 | Öffnung |
| 94 | Schläuche |
| 95 | Poröses Material |
| 96 | Erstes Ende |
| 97 | Taschenförmiger Überzug |
| 98 | Freies Ende |
| 99 | Haken |
| | |
| 100 | Flüssigkeitsdurchlässiges Element |
| 101 | Absaugeinrichtung |
| 102 | Stützring |
| 103 | Zwischenring |
| 104 | Halteeinrichtung |
| 105 | Ringförmiger Körper |
| 107 | Zylinder |
| 110 | Hülsenansatz |
| 111 | Trag platte |
| 112 | Schiene |
| 113 | Schlitten |
| 114 | Innenwandung |
| 115 | Stützelement |
| 116 | Blechplatte |
| 117 | Flexibler Ring |
| 118 | Umlaufende Dichtung |
| 119 | Abschlussring |
| | |
| 200 | Antriebszahnrad |
| 201 | Kette |
| 202 | Kettenspanner |
| 203 | Äußeres Zahnrad |
| 204 | Inneres Zahnrad |
| 205 | Mitnehmer |

## Patentansprüche

1. Vorrichtung zum Kühlen eines Folienschlauches (6),
mit einer Vorrichtung zum Aufbringen von Flüssigkeit auf die Außenwandung des Folienschlauches, wobei mit der Flüssigkeit die Folie kühlbar ist,
mit einem Ableitelement oder mehreren Ableitelementen zum Ableiten zumindest eines Teils der Flüssigkeit von dem Folienschlauch (6), wobei das Ableitelement oder die Ableitelemente zumindest Teile des Folienschlauches (6) in Umfangsrichtung umgibt oder umgeben,
wobei die Vorrichtung zum Aufbringen von Flüssigkeit wenigstens ein Folienführungselement mit wenigstens einer Innenwandung (92) umfasst, welches zumindest teilweise um den Folienschlauch herum angeordnet ist und entlang welchem der Folienschlauch (6) führbar ist,
**dadurch gekennzeichnet,**
**dass** das Ableitelement oder die Ableitelemente unterhalb des zumindest einen Folienführungselements angeordnet ist oder sind,
**dass** der Abstand, den das Ableitelement (100) oder die Ableitelemente zur Hauptachse (522) des Folienschlauchs (6) einnimmt oder einnehmen, veränderbar ist, und
**dass,** wenn ein Ableitelement (100) vorgesehen ist, dieses in Umfangsrichtung sich selbst in Teilbereichen überlappt, oder
**dass,** wenn mehrere Ableitelemente (100) vorgesehen sind, ein Ableitelement (100) Teilbereiche wenigstens eines benachbarten Ableitelements (100) überlappt.

2. Vorrichtung nach dem vorstehenden Anspruch
**dadurch gekennzeichnet, dass**
oberhalb oder im oberen Bereich des Folienführungselements ein Flüssigkeitsreservoir vorgesehen ist, mit welchem die Flüssigkeit bereitstellbar ist, wobei insbesondere die Flüssigkeit zwischen das Folienführungselement und den Folienschlauch (6) leitbar ist.

3. Vorrichtung nach einem der vorstehenden Ansprüche,
**dadurch gekennzeichnet, dass**
mehrere Ableitelelemente(100) vorgesehen sind, welche in ihrer Gesamtheit den Folienschlauch (6) vollständig umgeben.

4. Vorrichtung nach einem der vorstehenden Ansprüche,
**dadurch gekennzeichnet, dass**
wenigstens ein relativ zum Folienschlauch (6) in radialer Richtung bewegbares Stützelement (115) vorgesehen ist, an welchem das Ableitelement (100) befestigt oder auf welchem es sich in radialer Richtung abstützt.

5. Vorrichtung nach einem der vorstehenden Ansprüche,
**dadurch gekennzeichnet, dass**
eine Schienen-Schlitten-Anordnung (112, 113) vorgesehen ist, mit welchem das wenigstens eine Ableitelement (100) in radialer Richtung des Folienschlauches (6) bewegbar ist.

6. Vorrichtung nach einem der vorstehenden Ansprüche,
**dadurch gekennzeichnet, dass**
ein Antrieb vorgesehen ist, weicher auf Antriebskraftübertragungsmittel wirkt, mit welchen auf das zumindest eine Ableitelement (100) eine Antriebskraft zur Veränderung des Abstands übertragbar ist.

7. Vorrichtung nach dem vorstehenden Anspruch,
**dadurch gekennzeichnet, dass**
die Antriebskraftübertragungsmittel wenigstens eine Kette (201) umfassen, welche insbesondere wenigstens einen Mitnehmer (205) antreibt, welcher unmittelbar oder mittelbar auf das Stützelement (115) wirkt.

8. Vorrichtung nach einem der vorstehenden Ansprüche,
**dadurch gekennzeichnet, dass**
das Ableitelement (100) eine mit Durchgängen versehene Platte umfasst, insbesondere eine Metallplatte (116).

9. Vorrichtung nach einem der vorstehenden Ansprüche,
**dadurch gekennzeichnet, dass**
die dem Folienschlauch (6) zugewandte Oberfläche des Ableitelement (100) ein Material aus Stoff, Filz, Vlies und/oder Gewebe umfasst.

10. Verfahren zum Kühlen eines Folienschlauches (6), bei dem
• mit einer Vorrichtung zum Aufbringen von Flüssigkeit eine Flüssigkeit auf die Außenwandung des Folienschlauches aufbebracht wird, wobei mit der Flüssigkeit die Folie gekühlt wird.
• mit einem Ableitelement oder mit mehreren Ableitelementen zum Ableiten zumindest eines Teils der Flüssigkeit von dem Folienschlauch (6) abgeleitet wird, wobei das Ableitelement oder die Ableitelemente zumindest Teile des Folienschlauches (6) in Umfangsrichtung umgibt oder umgeben,
• die Vorrichtung zum Aufbringen von Flüssigkeit wenigstens ein Folienführungselement mit wenigstens einer Innenwandung (92) umfasst, welches zumindest teilweise um den Folienschlauch herum angeordnet ist und entlang welchem der Folienschlauch (6) geführt wird
**dadurch gekennzeichnet,**
**dass** bei einer Durchmesseränderung des Folienschlauchs der Abstand, den das Ableitelement (100) zur Hauptachse des Folienschlauchs (6) einnimmt, verändert wird, und
**dass**, wenn ein Ableitelement (100) vorgesehen ist, dieses in Umfangsrichtung sich selbst in Teilbereichen überlappt, oder
**dass,** wenn mehrere Ableitelemente (100) vorgesehen sind, wobei ein Ableitelement (100) Teilbereiche wenigstens eines benachbarten Ableitelements (100) überlappt.

## Claims

1. A device for cooling a blown film (6), having a device for applying liquid to the outer wall of the blown film, wherein the film can be cooled with the liquid, having a discharge element or a plurality of discharge elements for discharging at least one part of the liquid from the blown film (6), wherein the discharge element or discharge elements surrounds or surround at least parts of the blown film (6) in the circumferential direction,
wherein the device for applying liquid comprises at least one film guide element with at least one inner wall (92), which is arranged at least partially around the blown film and along which the blown film (6) can be guided,
**characterized in**
**that** the discharge element or the discharge elements is or are arranged underneath the at least one film guide element,
**that** the distance, which the discharge element (100) or the discharge elements assumes or assume to the main axis (522) of the blown film (6), can be changed, and
**that** if a discharge element (100) is provided, said discharge element overlaps itself in partial regions in the circumferential direction, or
**that** if a plurality of discharge elements (100) is provided, one discharge element (100) overlaps partial regions at least of one adjacent discharge element (100).

2. The device according to the preceding claim,
**characterized in that**
above or in the upper region of the film guide element a liquid reservoir is provided, with which the liquid can be provided, wherein in particular the liquid can be passed between the film guide element and the blown film (6).

3. The device according to any one of the preceding claims,
**characterized in that**
a plurality of discharge elements (100) is provided, which completely surround the blown film (6) in its entirety.

4. The device according to any one of the preceding claims,
**characterized in that**
at least one support element (115) movable relative to the blown film (6) in the radial direction is provided, on which the discharge element (100) is fastened and on which the discharge element is supported in the radial direction.

5. The device according to any one of the preceding claims,
**characterized in that**
a rail-carriage arrangement (112, 113) is provided, with which the at least one discharge element (100) is movable in the radial direction of the blown film (6).

6. The device according to any one of the preceding claims,
**characterized in that**
a drive is provided, which acts on drive force transmission means, with which a drive force for changing the distance can be transmitted to the at least one discharge element (100).

7. The device according to the preceding claim,
**characterized in that**
the drive force transmission means comprise at least one chain (201), which drives in particular at least one driver (205), which acts directly and indirectly on the support element (115).

8. The device according to any one of the preceding claims,
**characterized in that**
the discharge element (100) comprises a plate provided with passages, in particular, a metal plate (116).

9. The device according to any one of the preceding claims,
**characterized in that**
the surface of the discharge element (100) facing the blown film (6) comprises a material made of cloth, felt, nonwoven and/or woven fabric.

10. A method for cooling a blown film (6), in which
• with a device for applying liquid, a liquid is applied to the outer wall of the blown film, wherein the film is cooled with the liquid,
• with a discharge element or with a plurality of discharge elements for the discharging, at least one part of the liquid is discharged from the blown film (6), wherein the discharge element or the discharge elements surrounds or surround at least parts of the blown film (6) in the circumferential direction,
• the device for applying liquid comprises at least one film guide element with at least one inner wall (92), which is arranged at least partially around the blown film and along which the blown film (6) is guided,
**characterized in**
**that** in the event of a change in the diameter of the blown film, the distance, which the discharge element (100) assumes to the main axis of the blown film (6), is changed, and **that,** if a discharge element (100) is provided, said discharge element overlaps itself in partial regions in the circumferential direction or
**that,** if a plurality of discharge elements (100) is provided, one discharge element (100) overlaps partial regions at least of one adjacent discharge element (100).

## Revendications

1. Dispositif de refroidissement d'un film tubulaire (6),
avec un dispositif pour l'application d'un liquide sur la paroi externe du film tubulaire, dans lequel, avec le liquide, le film peut être refroidi,
avec un élément de déviation ou plusieurs éléments de déviation pour la déviation d'au moins une partie du liquide du film tubulaire (6), dans lequel l'élément de déviation ou les éléments de déviation entoure(nt) au moins des parties du film tubulaire (6) dans la direction circonférentielle,
dans lequel le dispositif d'application de liquide comprend au moins un élément de guidage de film avec au moins une paroi interne (92), qui est entouré au moins partiellement autour du film tubulaire et le long duquel le film tubulaire (6) peut être guidé,
**caractérisé en ce que**
l'élément de déviation ou les éléments de déviation est ou sont disposé(s) en dessous d'un élément de guidage de film,
la distance que l'élément de déviation (100) ou les éléments de déviation adopte(nt) par rapport à l'axe principal (522) du film tubulaire (6), est variable et
lorsqu'un élément de déviation (100) est prévu, celui-ci se superpose avec luimême dans certaines parties, ou
lorsque plusieurs éléments de déviation (100) sont prévus, un élément de déviation (100) se superpose avec des parties d'au moins un élément de déviation (100) adjacent.

2. Dispositif selon la revendication précédente,
**caractérisé en ce que**
au-dessus ou dans la partie supérieure de l'élément de guidage de film, un réservoir de liquide est prévu, avec lequel le liquide peut être mis à disposition, dans lequel plus particulièrement le liquide peut être conduit entre l'élément de guidage de film et le film tubulaire (6).

3. Dispositif selon l'une des revendications précédentes,
**caractérisé en ce que**
plusieurs éléments de déviation (100) sont prévus, qui, dans leur ensemble, entourent entièrement le film tubulaire (6).

4. Dispositif selon l'une des revendications précédentes,
**caractérisé en ce que**
au moins un élément d'appui (115), mobile par rapport au film tubulaire (6) dans la direction radiale, est prévu, auquel l'élément de déviation (100) est fixé ou contre lequel il s'appuie dans la direction radiale.

5. Dispositif selon l'une des revendications précédentes,
**caractérisé en ce que**
un système rail-chariot (112, 113) est prévu, avec lequel l'au moins un élément de déviation (100) peut être déplacé dans la direction radiale du film tubulaire (6).

6. Dispositif selon l'une des revendications précédentes,
**caractérisé en ce que**
un entraînement est prévu, qui agit sur des moyens de transmission de force d'entraînement, avec lesquels une force d'entraînement peut être transmise à l'au moins un élément de déviation (100) pour la modification de la distance.

7. Dispositif selon la revendication précédente,
**caractérisé en ce que**
les moyens de transmission de force d'entraînement comprennent une chaîne (201) qui entraîne plus particulièrement un taquet d'entraînement (205) qui agit directement ou indirectement sur l'élément d'appui (115).

8. Dispositif selon l'une des revendications précédentes,
**caractérisé en ce que**
l'élément de déviation (100) comprend une plaque munie de passages, plus particulièrement une plaque métallique (116).

9. Dispositif selon l'une des revendications précédentes,
**caractérisé en ce que**
la surface de l'élément de déviation (100) orientée vers le film tubulaire (6) comprend un matériau à base de tissu, de feutre, de non-tissé et/ou de toile.

10. Procédé de refroidissement d'un film tubulaire (6), dans lequel
• avec un dispositif d'application d'un liquide, un liquide est appliqué sur la paroi externe du film tubulaire, dans lequel le film est refroidi avec le liquide,
• avec un élément de déviation ou avec plusieurs éléments de déviation pour la déviation d'au moins une partie du liquide du film tubulaire (6), le liquide est dévié, dans lequel l'élément de déviation ou les éléments de déviation entoure(nt) au moins des parties du film tubulaire (6) dans la direction circonférentielle,
• le dispositif d'application de liquide comprend au moins un élément de guidage de film avec au moins une paroi interne (92), qui est disposée au moins partiellement autour du film tubulaire et le long duquel le film tubulaire (6) est guidé,
**caractérisé en ce que**
lorsqu'une variation du diamètre du film tubulaire, la distance qu'adopte l'élément de déviation (100) par rapport à l'axe principal du film tubulaire (6), est modifiée et
lorsqu'un élément de déviation (100) est prévu, celui-ci se superpose avec luimême dans certaines parties ou
lorsque plusieurs éléments de déviation (100) sont prévus, dans lequel un élément de déviation (100) se superpose avec des parties d'au moins un élément de déviation (100) adjacent.
